# EUROPEAN PATENT APPLICATION

(11) **EP 3 211 702 A1**
(43) Date of publication of application: **30.08.2017**
(21) Application number: 16203652.9
(22) Date of filing: 13.12.2016
(51) Int. Cl.: H01M 8/04828, H01M 8/0612, H01M 8/04014, H01M 8/0432, H01M 8/04537, H01M 8/04746

(54) **FUEL CELL SYSTEM**

(30) Priority: 26.02.2016 JP 2016035576
(71) Applicant: AISIN SEIKI KABUSHIKI KAISHA, Aichi 448-8650 (JP)
(72) Inventor: ICHIKAWA, Masaki, Kariya-shi,, Aichi 448-8650 (JP); MATSUOKA, Akira, Kariya-shi,, Aichi 448-8650 (JP)
(74) Representative: TBK

(57) **Abstract**

A fuel cell system (1) includes a first combustion portion (36), a second combustion portion (39), an ignition device (36a1, 36a2), a source fuel supply device (11a1), and a control device (15). The control device (15) includes a determination portion (15) determining whether a combustion return control is required on a basis of a fuel cell temperature level detected by a first temperature level sensor (34d) and a second combustion portion temperature level detected by a second temperature level sensor (12d), the combustion return control returning the first combustion portion (36) that is entirely or partially in a blow-off state to a combustion state, and a source fuel increase control portion (15) controlling the source fuel supply device (11 a1) to increase a supply amount of the source fuel in a case where the determination portion (15) determines that the combustion return control is required.

## Description

### TECHNICAL FIELD

This disclosure generally relates to a fuel cell system.

### BACKGROUND DISCUSSION

A known fuel cell system is disclosed in JP5809841 B (hereinafter referred to as Patent reference 1). As disclosed in Patent reference 1, the fuel cell system includes a control device that controls a fuel supply device to increase a flow amount of a fuel gas supplied to a fuel cell to equal to or greater than a predetermined flow amount, and controls a combustion acceleration device (an ignition device igniting an off-gas) to operate in a case where the voltage of the fuel cell decreases when a load increases and the fuel cell generates an electric power in response to the increased load.

Another known fuel cell system is disclosed in JP5253134B (hereinafter referred to as Patent reference 2). As disclosed in Patent reference 2, the fuel cell system includes a control device that controls an ignition device to operate in a case where the temperature level of a processed exhaust gas that is measured by a processed exhaust gas temperature level sensor comes to be equal to or higher than a predetermined temperature level.

Still another known fuel cell system is disclosed in JP5408994B (hereinafter referred to as Patent reference 3). As disclosed in Patent reference 3, the fuel cell system includes a control device that controls an ignition device to operate when a module temperature level sensor detects that a temperature level within a fuel cell module decreases lower than a predetermined temperature level in a case where a power generation amount of a solid oxide fuel cell increases from a certain power generation amount.

According to the fuel cell system disclosed in Patent reference 1, the control device controls the ignition device to operate to inhibit a flame off (a blow-off) in case of an operation with an increased amount of a fuel. The condition of the control is that the voltage of the fuel cell decreases when the load increases and the fuel cell generates the electric power response to the increased load. As a result, because the ignition device operates regardless of whether a combustion portion is in a blow-off state, further power saving is desired.

According to each of the fuel cell systems disclosed in Patent references 2 and 3, a combustion portion may not return to operate normally even though the ignition device is operated.

A need thus exists for a fuel cell system that secures a highly-efficient combustibility of a first combustion portion.

### SUMMARY

According to an aspect of this disclosure, a fuel cell system includes a fuel cell generating an electric power by, one of an unreformed fuel being directly supplied from a supply source and a reformed fuel being generated by a reformation of a source material for reforming supplied from the supply source, and a cathode gas, a first combustion portion introducing a combustible gas including the unreformed fuel and the reformed fuel that are not used in and that are sent from the fuel cell, the first combustion portion combusting the combustible gas with the cathode gas, the first combustion portion discharging a combustion gas, a second combustion portion introducing the combustible gas that is not used in the first combustion portion and that is discharged from the first combustion portion, the second combustion portion combusting the combustible gas with the cathode gas, the second combustion portion discharging the combustion gas, an ignition device igniting the first combustion portion by being energized, a source fuel supply device supplying a source fuel serving as the unreformed fuel or the source material for reforming, a first temperature level sensor detecting a fuel cell temperature level serving as a temperature level of the fuel cell, a second temperature level sensor detecting a second combustion portion temperature level serving as a temperature level of the second combustion portion, and a control device controlling at least the source fuel supply device. The control device includes a determination portion determining whether a combustion return control is required on a basis of the fuel cell temperature level detected by the first temperature level sensor and the second combustion portion temperature level detected by the second temperature level sensor, the combustion return control returning the first combustion portion that is entirely or partially in a blow-off state to a combustion state, and a source fuel increase control portion controlling the source fuel supply device to increase a supply amount of the source fuel in a case where the determination portion determines that the combustion return control is required.

Accordingly, the determination portion (the control device) determines whether the combustion return control is required on a basis of the fuel cell temperature level detected by the temperature level sensor and on a basis of the second combustion portion temperature level detected by the temperature level sensor, the combustion return control of the first combustion portion that is entirely or partially in the blow-off state. In a case where the determination portion (the control device) determines that the combustion return control is required, the source fuel increase control portion (the control device) controls the source material pump to increase the supply amount of the source fuel. As a result, the source fuel may be appropriately increased and may be supplied to the first combustion portion when the combustion return control of the first combustion portion is required, and the combustion return control of the first combustion portion may be securely performed. Accordingly, the combustibility of the first combustion portion may be highly efficiently secured.

According to another aspect of this disclosure , in a case where the second combustion portion temperature level detected by the second temperature level sensor is equal to or higher than the a first determination temperature level for the second combustion portion temperature, or in a case where the second combustion portion temperature level detected by the second temperature level sensor is equal to or higher than a second determination temperature level for the second combustion portion temperature that is lower than the first determination temperature level for the second combustion portion temperature and being lower than the first determination temperature level for the second combustion portion temperature, and the fuel cell temperature level detected by the first temperature level sensor is lower than a determination temperature level for the fuel cell temperature, the determination portion determines that the combustion return control is required.

Accordingly, the control device may appropriately determine whether the combustion return control of the first combustion portion is required.

According to still further aspect of this disclosure, the first determination temperature level for the second combustion portion temperature and the second determination temperature level for the second combustion portion temperature are corrected in response to an environmental temperature level of the fuel cell system.

Accordingly, the control device may further appropriately determine whether the combustion return control of the first combustion portion is required while taking the environmental temperature level into consideration.

According to further aspect of this disclosure, the first determination temperature level for the second combustion portion temperature and the second determination temperature level for the second combustion portion temperature are corrected in response to an output amount of the electric power of the fuel cell.

Accordingly, the control device further appropriately determines whether the combustion return control of the first combustion portion is required while taking the output amount of electric power of the fuel cell into consideration.

According to still another aspect of this disclosure, the control device further includes an ignition device first operation portion, and the ignition device first operation portion increases the supply amount of the source fuel and operates the ignition device in a case where the first combustion portion does not return to the combustion state even though the source fuel increase control portion increases the supply amount of the source fuel.

Accordingly, the control device may further securely perform the combustion return control of the first combustion portion. Accordingly, the combustibility of the first combustion portion 36 may be highly efficiently secured.

According to another aspect of this disclosure, the fuel cell system further includes a cathode gas supply device supplying the cathode gas to the first combustion portion. The control device further includes a cathode gas increase control portion controlling the cathode gas supply device to increase a supply amount of the cathode gas supplied to the first combustion portion in a case where the first combustion portion does not return to the combustion state even though the ignition device first operation portion increases the supply amount of the source fuel and operates the first ignition device.

Accordingly, the control device may further securely perform the combustion return control of the first combustion portion. Accordingly, the combustibility of the first combustion portion may be highly efficiently secured.

According to still further aspect of this disclosure, the control device further includes an ignition device second operation portion. The ignition device second operation portion increases the supply amount of the cathode gas and operates the ignition device in a case where the first combustion portion does not return to the combustion state even though the cathode gas increase control portion increases the supply amount of the cathode gas.

Accordingly, the control device may further securely perform the combustion return control of the first combustion portion. Accordingly, the combustibility of the first combustion portion may be highly efficiently secured.

According to still another aspect of this disclosure, the fuel cell system further includes an inverter device converting a direct-current voltage outputted from the fuel cell into an alternating-current voltage. The control device further includes an output electric power change portion controlling the source fuel supply device, the cathode gas supply device, and the inverter device to change the output amount of the electric power of the fuel cell in a case where the first combustion portion does not return to the combustion state even though the ignition device second operation portion increases the supply amount of the cathode gas and ignites the ignition device.

Accordingly, the control device may further securely perform the combustion return control of the first combustion portion. Accordingly, the combustibility of the first combustion portion may be highly efficiently secured.

According to still further aspect of this disclosure, the output electric power change portion changes the output amount of the electric power only by a predetermined amount.

Accordingly, the control device may further securely perform the combustion return control of the first combustion portion. Accordingly, the combustibility of the first combustion portion may be highly efficiently secured.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating a fuel cell system according to an embodiment disclosed here;

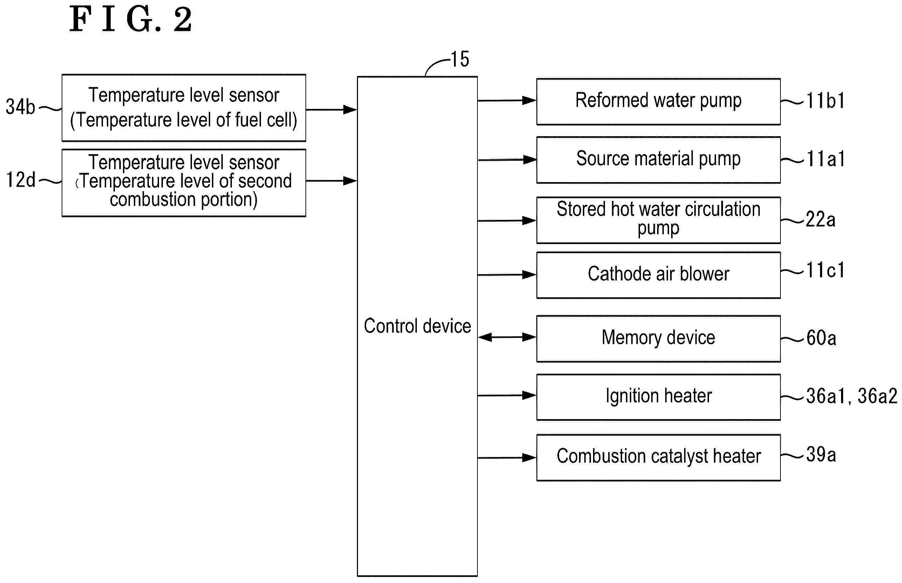

Fig. 2 is a block diagram illustrating the fuel cell system shown in Fig. 1;
Fig. 3 is a flowchart of a control program operated by a control device shown in Fig. 2;
Fig. 4 is a chart for a determination by a combination of a fuel cell temperature level and a second combustion portion temperature level whether a combustion return control of a first combustion portion is required;
Fig. 5 is a view illustrating a relationship between a first determination temperature level for the second combustion portion temperature (a second determination temperature level for the second combustion portion temperature) and an environmental temperature level;
Fig. 6 is a view illustrating a relationship between the first determination temperature level for the second combustion portion temperature (the second determination temperature level for the second combustion portion level) and an output amount of electric power of the fuel cell; and
Fig. 7 is an explanatory view of a setting of a predetermined amount of an output amount of electric power of the fuel cell, when the output amount of electric power of the fuel cell changes, in response to the output amount of electric power of the fuel cell outputted when the control device determines that the combustion return control is required

### DETAILED DESCRIPTION

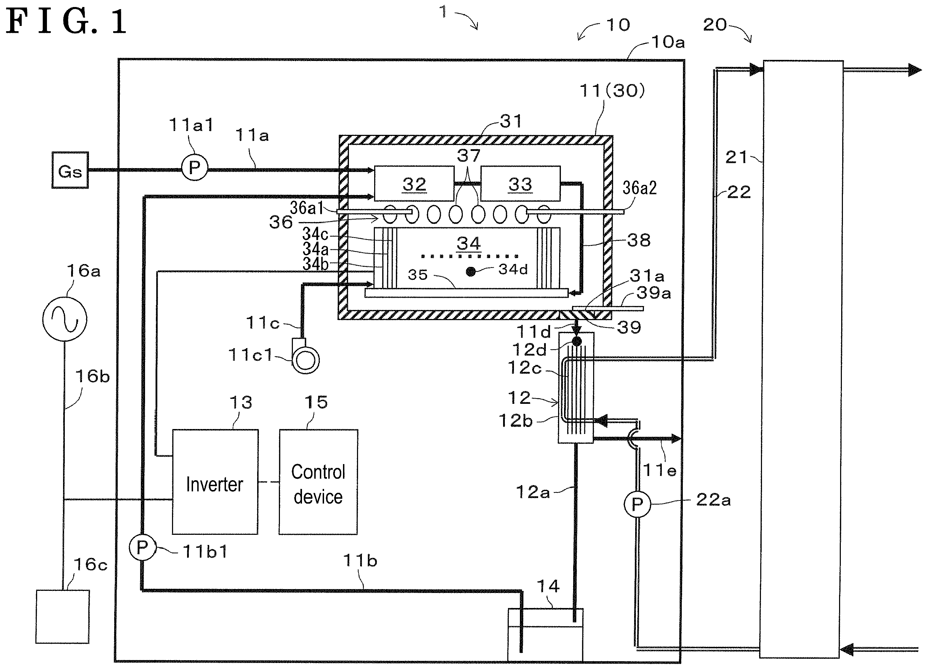

An embodiment of a fuel cell system 1 according to a disclosure will hereunder be explained. As shown in Fig. 1, the fuel cell system 1 includes a power generation unit 10 and a hot-water storage tank 21. The power generation unit 10 includes a body 10a, a fuel cell module 11 (30), a heat exchanger 12, an inverter device 13, a water tank 14, and a control device 15 (i.e., serving as a determination portion, a source fuel increase control portion, an ignition device first operation portion, a cathode gas increase control portion, an ignition device second operation portion, and an output electric power change portion). The fuel cell module 11 (30), the heat exchanger 12, the inverter device 13, the water tank 14, and the control device 15 are contained in the body 10a.

The fuel cell module 11 at least includes a fuel cell 34. The fuel cell module 11 is supplied with a source material for reforming (a source material), reforming water, and cathode air. Specifically, a source material supply pipe for reforming 11 a (a source material supply pipe 11 a) includes one end that is connected to a supply source Gs to supply the source material, and the other end that is connected to the fuel cell module 11. The source material supply pipe 11a includes a source material pump 11 a1 (i.e., serving as a source fuel supply device). The source material pump 11a1 corresponds to a source fuel supply device supplying a source fuel serving as an unreformed fuel or the source material. A water supply pipe 11 b includes one end that is connected to the water tank 14 to supply the reforming water, and the other end that is connected to the fuel cell module 11. The water supply pipe 11b includes a reforming water pump 11b1. A cathode air supply pipe 11c includes one end that is connected to a cathode air blower 11 c1 to supply the cathode air, and the other end that is connected to the fuel cell module 11. The cathode air blower 11 c1 serves as a cathode gas supply device supplying the cathode air serving as a cathode gas to a first combustion portion 36.

The heat exchanger 12 is supplied with a flue gas exhausted from the fuel cell module 11, and is supplied with stored water from the hot-water storage tank 21. The heat exchanger 12 exchanges heat between the flue gas (including respective exhaust heats of the fuel cell 34 and of a reforming portion 33) and the stored hot water. The heat exchanger 12 exchanges heat between the flue gas and the stored hot water to generate condensed water by condensing water vapor of the flue gas. The stored hot water corresponds to a thermal catalyst (an exhaust heat recovery water) recovering the exhaust heat of the flue gas.

The heat exchanger 12 includes a first casing 12b. An upper portion of the first casing 12b is connected to a first exhaust pipe 11 d of the fuel cell module 11. A lower portion of the first casing 12b is connected to a second exhaust pipe 11e that is connected to an outer side (external air). A bottom portion of the first casing 12b is connected to a condensed water supply pipe 12a that is connected to the water tank 14. A flue gas flow passage sending the flue gas is provided within the first casing 12b. A heat exchanging portion (a condensing portion) 12c being connected to a stored hot water circulation line 22 is disposed at the flue gas flow passage. The stored hot water flows in the heat exchanging portion 12c. The flue gas flows at an outer side of the heat exchanging portion 12c. It is favorable that the stored hot water flows in an opposing direction of a flowing direction of the flue gas.

In the heat exchanger 12, the flue gas sent from the fuel cell module 11 is introduced to the first casing 12b via the first exhaust pipe 11 d. The flue gas exchanges heat with the stored hot water when passing through the heat exchanging portion 12c where the stored hot water flows, and is cooled while being condensed. Then, the flue gas is discharged to the outer side via the second exhaust pipe 11e. The condensed water is supplied to the water tank 14 via the condensed water supply pipe 12a (the condensed water falls by its own weight). Meanwhile, the stored hot water sent to the heat exchanging portion 12c is heated and discharged.

A second combustion portion 39 is provided at a flue gas introduction portion of the heat exchanger 12, that is, an outlet 31a of a second casing 31. The second combustion portion 39 introduces a first combustion portion off-gas serving as a gas exhausted from the first combustion portion 36, that is, an unused combustible gas (for example, hydrogen, methane gas, and carbon monoxide) exhausted from the first combustion portion 36, combusts the combustible gas with the cathode gas, and discharges the combustion gas. The second combustion portion 39 is made from a combustion catalyst serving as a catalyst combusting the combustible gas. The combustion catalyst is formed such that, a noble metal, for example, platinum or palladium, is supported on a ceramic carrier. The combustion catalyst may be filled in a pellet catalyst. Alternatively, the combustion catalyst may be supported on a honeycomb made of ceramic metal or on foam metal.

The second combustion portion 39 includes a combustion catalyst heater 39a for combusting the combustible gas by heating the combustion catalyst to an activation temperature level of the catalyst. The combustion catalyst heater 39a is heated in response to a command of the control device 15. The combustion catalyst heater 39a corresponds to a second ignition device igniting the second combustion portion 39 by being energized.

A temperature level sensor 12d (i.e., serving as a second temperature level sensor) is disposed at an inlet of the heat exchanger 12 to which the flue gas is sent, that is, a direct downstream of the combustion catalyst heater 39a (the second combustion portion 39). The temperature level sensor 12d detects a temperature level of the inlet of the heat exchanger 12 to which the flue gas is sent, and sends a detection result to the control device 15. The inlet temperature level of the heat exchanger 12 to which the flue gas is sent correlates to, and is substantially equal to a temperature level of the second combustion portion 39. The temperature level sensor 12d corresponds to a second temperature level sensor detecting a second combustion portion temperature level that serves as a temperature level of the second combustion portion 39. It is favorable that the temperature level sensor 12d is disposed in adjacent to an inlet of the flue gas flow passage (a connection position between the temperature level sensor 12d and the first exhaust pipe 11d), the inlet where the flue gas enters. Alternatively, the temperature level sensor 12d may be provided at the first exhaust pipe 11 d.

An exhaust heat recovery system 20 includes the heat exchanger 12, the hot-water storage 21, and the stored hot water circulation line 22. The exhaust heat recovery system 20 collects the exhaust heat of the fuel cell module 11 and stores the exhaust heat in the stored hot water.

The hot water storage 21 stores the hot water and is connected to the stored hot water circulation line 22 circulating the stored hot water (circulates in a direction shown in arrows in Fig. 1). The hot water storage 21 corresponds to a self-contained container. The hot water storage 21 corresponds to a pressure-resistant container. Basically, the temperature level distribution range within the hot water storage 21 is divided into two layers having different temperature levels. The upper layer corresponds to a layer in which the temperature level within the hot water storage 21 is relatively high (for example, equal to or higher than 50 degrees Celsius, or °C). The lower layer corresponds to a layer in which the temperature level within the hot water storage 21 is relatively low (for example, equal to or lower than 20 degrees Celsius, or °C (the temperature level of tap water).

A stored hot water circulation pump 22a and the heat exchanger 12 are provided on the stored hot water circulation line 22. The stored hot water circulation pump 22a corresponds to a discharge device discharging the thermal catalyst (the stored hot water) of the stored hot water circulation line 22, and circulates the thermal catalyst in the direction shown in the arrows in Fig. 1. A discharge amount (a delivery amount) of the thermal catalyst is controlled by the control device 15.

The inverter device 13 is inputted with a direct current voltage, or a DC voltage (a DC power) outputted from the fuel cell 34 and exchanges the DC voltage into a predetermined alternating current voltage, or an AC voltage (an AC power). The inverter device 13 outputs the AC voltage to a power supply line 16b being connected to an AC system power supply 16a and an external electric power load 16c (for example, an electrical appliance). The inverter device 13 inputs the AC voltage sent from the system power supply 16a via the power supply line 16b, exchanges the AC voltage into a predetermined DC voltage, and outputs the DC voltage to an auxiliary machinery (each pump or blower). The inverter device 13 increases and decreases a sweep current sent from the fuel cell 34. For example, in a case where an input amount of the reformed gas is constant, or fixed, the amount of an anode off-gas may be increased by the decrease of the sweep current.

The water tank 14 stores the condensed water supplied from the heat exchanger 12 and supplies the condensed water to the reforming portion 33 as reforming water. A water level sensor detecting a water level (an amount of water) within the water tank 14 is disposed within the water tank 14. The detection result of the water level sensor is outputted to the control device 15. The water level sensor corresponds to, for example, a float-type sensor. The water level sensor exchanges a floating amount (an up-and-down amount) into a resistance value by a variable resistance (a potentiometer), and displays the water level (the remaining amount of water) by the fluctuation of the resistance value. An ion exchange resin purifies the condensed water at the water tank 14. The control device 15 controls the fuel cell system 1 to operate by driving the auxiliary machinery.

The fuel cell module 11 (30) includes the second casing 31, an evaporation portion 32, a reforming portion 33, and the fuel cell 34. The second casing 31 is made from a heat insulating material and is formed in a box shape. The evaporation portion 32 is heated by the combustion gas and preheats the supplied source material for reforming (the source material) while generating water vapor by evaporating the supplied reforming water. The evaporation portion 32 mixes the generated water vapor with the preheated source material to supply the mixed material to the reforming portion 33. The source material corresponds to gaseous fuel for reforming (gaseous fuel) such as natural gas (having methane as a main component) and liquefied petroleum gas (LP gas), and liquid fuel for reforming (liquid fuel) such as kerosene, gasoline (petrol) and methanol, for example. In the present embodiment, the source material corresponds to the natural gas.

A water supply pipe 11 b includes one end (a lower end) that is connected to the water tank 14, and the other end that is connected to the evaporation portion 32. The source material supply pipe 11a includes one end that is connected to a supply source Gs and the other end that is connected to the evaporation portion 32. The supply source Gs corresponds to a gas supply pipe of, for example, city gas, and a gas cylinder of the LP gas.

The reforming portion 33 generates and discharges the reformed gas from mixed gas (source material, water vapor for reforming) supplied from the evaporation portion 32 by being heated by the combustion gas and by being supplied with the heat required for a water vapor reforming reaction. The inside of the reforming portion 33 is filled with a catalyst, for example, Ru catalyst or a Ni catalyst. The mixed gas reacts by means of the catalyst so as to be reformed, thereby generating gas including hydrogen gas and carbon monoxide gas (so-called the water vapor reforming reaction). The reformed gas includes hydrogen, carbon monoxide, carbon dioxide, water vapor, natural gas (methane gas) that is not reformed, and reforming water (water vapor) not used for reforming. As such, the reforming portion 33 generates the reformed gas (a reformed fuel) by the source material (the source fuel) and the reforming water, and supplies the reformed gas to the fuel cell 34. The water vapor reforming reaction corresponds to an endothermic reaction.

The fuel cell 34 includes plural cells 34a that are stacked with one another. Each of the plural cells 34a includes a fuel electrode, an air electrode (oxidant pole), and an electrolyte that is disposed between the fuel electrode and the air electrode. The fuel cell 34 of the embodiment corresponds to the solid oxide fuel cell, and uses a zirconium oxide serving as a type of the solid oxide as the electrolyte. Hydrogen, carbon monoxide and methane gas are supplied to the fuel electrode of the fuel cell 34 as fuel. An operation temperature level of the fuel cell 34 is approximately 400 degrees Celsius, or 400 °C, to 1000 °C. Natural gas and lime gas other than hydrogen may be used as the unreformed fuel (the fuel directly supplied to the fuel electrode from the supply source Gs).

The cell 34a includes a first side that is adjacent to the fuel electrode and a second side that is adjacent to the air electrode. The first side of the cell 34a is provided with a fuel flow passage 34b sending the reformed gas serving as a fuel. The second side of the cell 34a is provided with an air flow passage 34c sending an air (a cathode air) serving as a cathode gas.

The fuel cell 34 includes a temperature level sensor 34d (i.e., serving as a first temperature level sensor) detecting the temperature level of the fuel cell 34. The temperature level sensor 34d is disposed at a center portion of the cell 34a of the fuel cell 34 in a stacking direction thereof and at a center position of the cell 34a in the upper-lower direction. The temperature level sensor 34d transmits the detection result to the control device 15. The temperature level sensor 34d corresponds to a first temperature level sensor detecting the temperature level of the fuel cell.

The fuel cell 34 is disposed on a manifold 35. The reformed gas (the anode gas) sent from the reforming portion 33 is supplied to the manifold 35 via a reformed gas supply pipe 38. The fuel flow passage 34b includes a lower end (a first end) that is connected to a fuel outlet of the manifold 35. The reformed gas discharged from the fuel outlet is sent from the lower end of the fuel flow passage 34b and is discharged from an upper end (a second end) of the fuel flow passage 34b. The cathode air sent by a cathode air blower 11 c1 is supplied to the fuel cell 34 via a cathode air supply pipe 11c. The cathode air is sent from a lower end of the air flow passage 34c and is discharged from an upper end of the air flow passage 34c.

The fuel cell 34 generates the electric power by the anode gas (corresponding to the reformed fuel, or the unreformed fuel) supplied to the fuel electrode, and the cathode gas (the cathode air) supplied to the air electrode. That is, the electrochemical reactions presented by a chemical formula 1 and a chemical formula 2 occur at the fuel electrode, and the electrochemical reaction presented by a chemical formula 3 occurs at the air electrode. That is, oxide ion (O²⁻) generated at the air electrode passes through the electrolyte and reacts with the hydrogen at the fuel electrode and thereby generating electric energy. Accordingly, the reformed gas and the cathode gas, which were not used for the power generation, are discharged from the fuel flow passage 34b and the air flow passage 34c, respectively.

(Chemical formula 1) H₂ + O²⁻ → H₂O + 2e⁻

(Chemical formula 2) CO + O²⁻ → CO₂ + 2e⁻

(Chemical formula 3) 1/2O₂ + 2^{e-} → O²⁻

The reformed gas (anode off-gas), which was not used for the power generation, is discharged to the first combustion portion 36 (a combustion space that is provided between the fuel cell 34 and the evaporation portion 32 (the reforming portion 33)) via the fuel flow passage 34b. The cathode gas (air: cathode off-gas), which was not used for the power generation, is discharged to the combustion portion 36 via the air flow passage 34c. The anode off-gas is combusted by being mixed with the cathode off-gas at the combustion portion 36. The combustion gas heats the evaporation portion 32 and the reforming portion 33. Moreover, the combustion gas heats the fuel cell module 11 to an operation temperature. Then, the combustion gas, as an exhaust gas, is exhausted to an outer side of the fuel cell module 11 via an exhaust pipe 11e provided at the lower portion of the first casing 12b. As such, the combustion portion 36 corresponds to a first combustion portion that introduces a combustible gas (the anode off-gas) including the reformed fuel (the reformed gas) that is not used and that is sent from the fuel cell 34, heats the combustible gas with the oxidant gas, and discharges the combustion gas (including the water vapor).

The first combustion portion 36 generates a flame 37 (the combustion gas) by combusting the anode off-gas. The first combustion portion 36 includes a pair of ignition heaters, a first ignition heater 36a1 (i.e., serving as an ignition device) and a second ignition heater 36a2 (i.e., serving as an ignition device), to ignite the anode off-gas. The first and second ignition heaters 36a1, 36a2 correspond to a first ignition device igniting the first combustion portion 36 by being energized in response to the command of the control device 15.

The control device 15 controls the entire operation of the fuel cell system 1. The control device 15 at least controls the cathode air blower 11 c1 and the source material pump 11a1. The control device 15 includes a microcomputer. The microcomputer includes an input-output interface, a central processing unit or a CPU, a random access memory or a RAM, and a read-only memory or a ROM, which are connected to one another via respective buses. The CPU performs the integral operation of the fuel cell system 1. The RAM temporarily memorizes variables required for the operation of a control program. The ROM memorizes the control program.

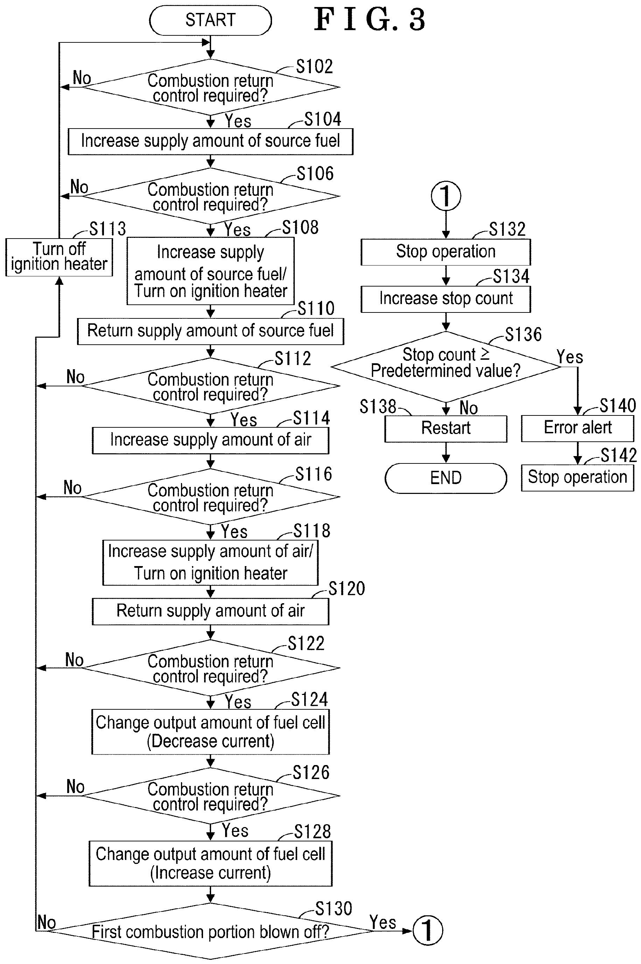

Next, the operation of the fuel cell system 1 will be explained. The control device 15 starts operation of a program that corresponds to a flowchart shown in Fig. 3 when a start switch is on (or when an activation is automatically started at a start time preset by a user). The fuel cell system 1 is in a normal operation of the power generation.

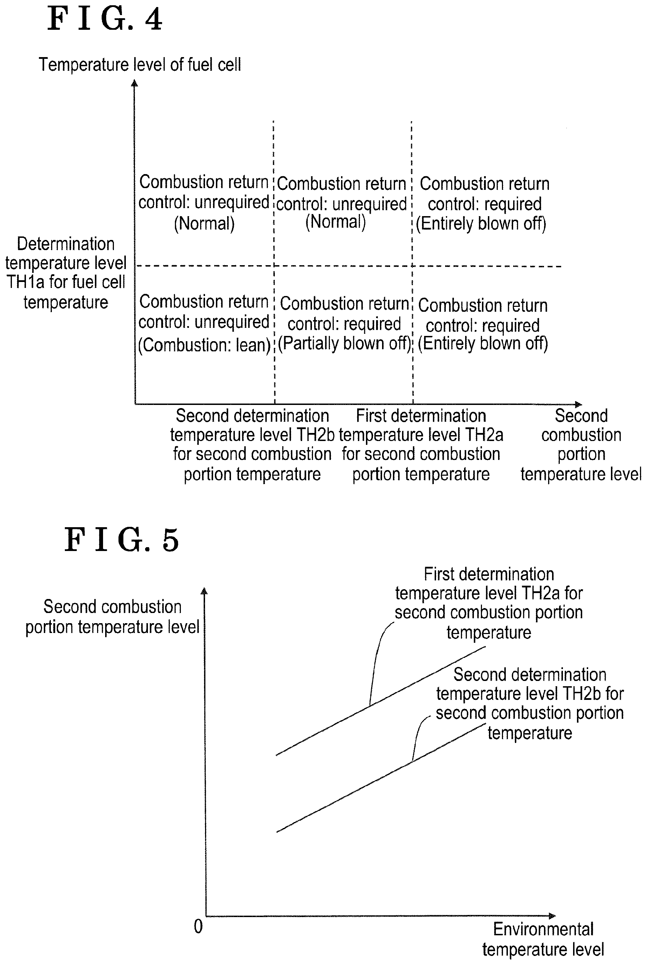

The control device 15 (i.e., serving as a determination portion) determines whether a combustion return control of the first combustion portion 36 returning the first combustion portion 36 to be in a combustion state is required, the first combustion portion 36 that is entirely or partially in a blow-off state, in accordance with a fuel cell temperature level of the fuel cell 34 and a second combustion portion temperature level of the second combustion portion 39. As shown in Fig. 4, the control device 15 determines whether the combustion return control is required on a basis of a combination of the detected fuel cell temperature level and the detected second combustion portion temperature level.

Specifically, in a case where the second combustion portion temperature level detected by the temperature level sensor 12d is equal to or higher than a first determination temperature level TH2a for the second combustion portion temperature regardless of whether the fuel cell temperature level detected by the temperature level sensor 34d (the first temperature level sensor) is lower than a determination temperature level TH1a for the fuel cell temperature, the control device 15 determines that the combustion return control is required. It is favorable that the first determination temperature level TH2a for the second combustion portion temperature is set relatively high, the relatively high temperature level that is generated when a relatively large amount of the combustible gas, which is not combusted in the first combustion portion 36, is supplied to the combustion catalyst 39 in a case where the first combustion portion 36 is not in a normal combustion state (specifically, the first combustion portion 36 is entirely in the blow-off state). As such, in a case where the second combustion portion temperature level is equal to or higher than the first determination temperature level TH2a for the second combustion temperature level, the first combustion portion 36 is entirely in the blow-off state.

In a case where the detected second combustion portion temperature level is less than the first determination temperature level TH2a for the second combustion portion temperature, and the detected fuel cell temperature level is equal to or higher than the determination temperature level TH1a for the fuel cell temperature, the control device 15 determines that the combustion return control is not required (unrequired). In a case where the fuel cell temperature level is equal to or higher than the determination temperature level TH1a for the fuel cell temperature, the first combustion portion 36 is in the normal combustion state. Here, the reason that the second combustion portion temperature level is lower than the first determination temperature level TH2a for the second combustion portion is because the generated, uncombustible combustible gas is relatively less due to the complete combustion of the combustible gas at the first combustion portion 36, and because the uncombustible combustible gas supplied to the combustion catalyst 39 comes to be relatively less. Accordingly, the combustion temperature level of the combustion catalyst 39 comes to be relatively low.

Furthermore, in a case where the detected second combustion portion temperature level is equal to or higher than the second determination temperature level TH2b for the second combustion portion temperature and lower than the first determination temperature level TH2a for the second combustion portion temperature, and lower than a determination temperature level TH 1 a for the fuel cell temperature, the control device 15 determines that the combustion return control is required. The second determination temperature level TH2b for the second combustion portion temperature is lower than the first determination temperature level TH2a for the second combustion portion temperature. It is favorable that the second temperature level TH2b for the second combustion portion temperature is set as a temperature level in which the control device 15 determines whether the first combustion portion 36 is partially in the blow-off state in a case where the fuel cell temperature level is lower than the determination temperature level TH1a for the fuel cell temperature. As such, in a case where the fuel cell temperature level is lower than the determination temperature level TH1a for the fuel cell temperature, and the second combustion portion temperature level is equal to or higher than the second determination temperature level TH2b for the second combustion portion temperature and is lower than the first determination temperature level TH2a for the second combustion portion temperature, the first combustion portion 36 is in the partially blow-off state.

In a case where the detected second combustion portion temperature level is lower than the second determination temperature level TH2b for the second combustion portion temperature, and the detected fuel cell temperature level is lower than the determination temperature level TH1a for the fuel cell temperature, the control device 15 determines that the combustion return control is not required. Here, the combustible gas supplied to the first combustion portion 36 and the combustion catalyst 39 is in a lean state, and the amount of the supplied combustible gas is less.

It is favorable that the first determination temperature level TH2a for the second combustion portion temperature and the second determination temperature level TH2b for the second combustion portion temperature are corrected in response to an environmental temperature level of the fuel cell system 1. Specifically, the first determination temperature TH2a for the second combustion portion temperature and the second determination temperature level TH2b for the second combustion portion temperature are set higher as the environmental temperature of the fuel cell system 1 increases shown in Fig. 5.

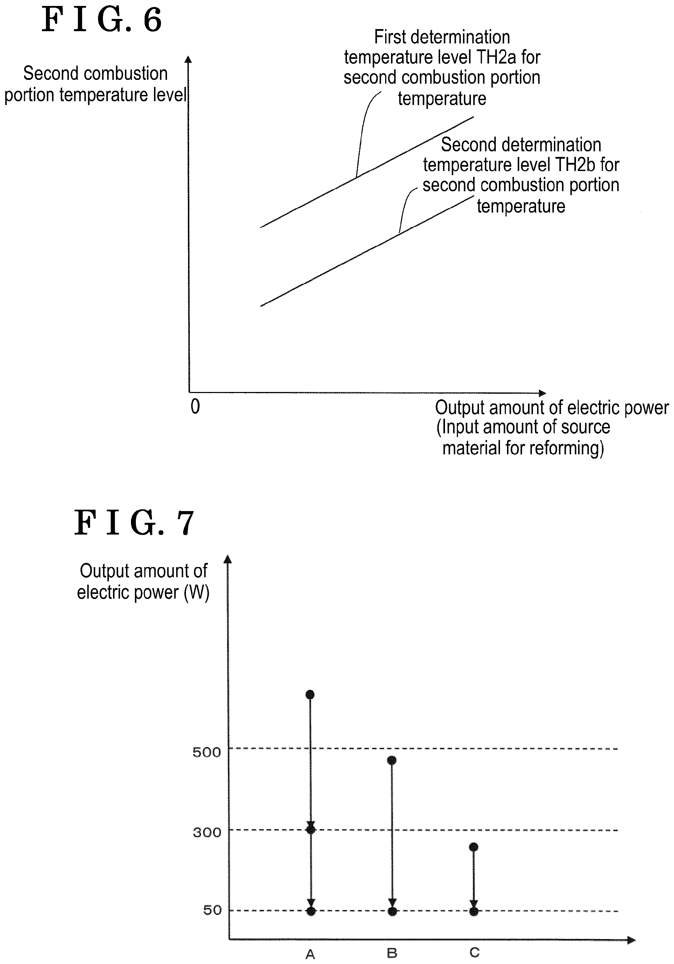

It is favorable that the first determination temperature TH2a for the second combustion portion temperature and the second determination temperature level TH2b for the second combustion portion temperature are corrected in response to the output amount of electric power of the fuel cell 34 when the control device 15 determines that the combustion return control is required. Specifically, as shown in Fig. 6, the first determination temperature TH2a for the second combustion portion temperature and the second determination temperature level TH2b for the second combustion portion temperature are set higher as the output amount of the electric power of the fuel cell 34 increases. Alternatively, the first determination temperature TH2a for the second combustion portion temperature and the second determination temperature level TH2b for the second combustion portion temperature may be corrected in response to the supply amount (an input amount) of the fuel (the source material for reforming) supplied to the fuel cell 34 when the control device 15 determines that the combustion return control is required. In particularly, as shown in Fig. 6, the first determination temperature TH2a for the second combustion portion temperature and the second determination temperature level TH2b for the second combustion portion temperature are set higher as the input amount of the source material increases.

As shown in Fig. 3, in case of determining that the combustion return control is not required (NO in Step S102) in Step S102, the control device 15 repeatedly performs a process of Step S102. In case of determining that the combustion return control is required in Step S102, the control device 15 proceeds to Step S104, and performs the combustion return control.

In Step S104, the control device 15 (i.e., serving as a source fuel increase control portion) controls the source pump 11a1 to increase the supply amount of the source material (source fuel). Specifically, the control device 15 increases the supply amount of the source material from the supply amount of the source material when the control device 15 determines that the combustion return control is required. The supply amount corresponds to a supply amount (the input amount, a delivery amount) per unit time. For example, it is favorable that the increase amount of the source material changes in response to a degree of the blow-off state. In particular, the increase amount of the source material changes in response to the second combustion portion temperature level TH2 detected by the temperature level sensor 12d. In a case where the second combustion portion temperature level TH2 is equal to or higher than the second determination temperature level TH2b for the second combustion portion temperature, the control device 15 increases the increase amount of the source material as the second combustion portion temperature level TH2 increases. For example, in a case where the second combustion portion temperature level TH2 is equal to or higher than the second determination temperature level TH2b for the second combustion portion temperature and is lower than the first determination temperature level TH2a for the second combustion portion temperature, the control device 15 increases the supply amount of the source material by 10 percent, or 10 %. In a case where the second combustion portion temperature level TH2 is equal to or higher than the first determination temperature level TH2a for the second combustion portion temperature, the control device 15 increases the supply amount of the source material by 25 %.

Similarly to Step S102, the control device 15 determines whether the combustion return control is required in Step S106. In a case where the control device 15 determines that the combustion return control is not required in Step S106 (NO in Step S106), the control device 15 returns to Step S102. In a case where the combustion return control is required in Step S106 (YES in Step S106), the control device 15 proceeds to Step S108 and performs the combustion return control.

In Step S108, in a case where the first combustion portion 36 does not return to the combustion state even though the source fuel increase control portion increases the supply amount of the source material (the source fuel), the control device 15 (i.e., serving as an ignition device first operation portion) increases the supply amount of the source material and energizes the ignition heaters 36a1, 36a2 to operate. The control device 15 maintains this state in a predetermined time (for example, five minutes).

In Step S110, the control device 15 returns the supply amount of the source material to the supply amount before the source fuel increase control portion increases the supply amount of the source material in Step S110. Similarly to Step S102, the control device 15 determines whether the combustion return control is required in Step S112. In case of determining that the combustion return control is not required in Step S112 (NO in Step S112), the control device 15 returns to Step S102 via Step S113. The control device 15 stops the operation of the ignition heaters 36a1, 36a1 by stopping the energization in Step S113.

In a case where the control device 15 determines that the combustion return control is required in Step S112 (YES in Step S112), the control device 15 proceeds to Step S114, and further performs the combustion return control. In a case where the first combustion portion 36 does not return to the combustion state even though the ignition device first operation portion increases the supply amount of the source material and ignites the ignition heaters 36a1, 36a2, the control device 15 (i.e., serving as a cathode gas increase control portion) controls the cathode air blower 11 c1 to increase the supply amount of the cathode air (the cathode gas) to the first combustion portion 36. At this time, the supply amount of the source material is equal to the supply amount of the source material when the control device 15 determines that the combustion return control is required in Step S102.

Specifically, the control device 15 increases the supply amount of the cathode air from the supply amount of the cathode air when the control device 15 determines that the combustion return control is required in Step S112. The supply amount of the cathode air corresponds to a supply amount (an input amount, a delivery amount) per unit time. For example, it is favorable that the increase amount of the cathode air changes in response to a degree of the blow-off state. In particular, the increase amount of the cathode air changes in response to the second combustion portion temperature level TH2 detected by the temperature level sensor 12d. In a case where the second combustion portion temperature level TH2 is equal to or higher than the second determination temperature level TH2b for the second combustion portion temperature, the control device 15 increases the increase amount of the cathode air as the second combustion portion temperature level TH2 increases. For example, in a case where the second combustion portion temperature level TH2 is equal to or higher than the second determination temperature level TH2b for the second combustion portion temperature and is lower than the first determination temperature level TH2a for the second combustion portion temperature, the control device 15 increases the supply amount of the cathode air by 15 %. In a case where the second combustion portion temperature level TH2 is equal to or higher than the first determination temperature level TH2a for the second combustion portion temperature, the control device 15 increases the supply amount of the cathode air by 30 %.

Similarly to Step S102, the control device 15 determines whether the combustion return control is required in Step S116. In a case where the control device 15 determines that the combustion return control is not required in Step S116 (NO in Step S116), the control device 15 returns to Step S102 via Step S113.

In a case where the control device 15 determines that the combustion return control is required in Step S116 (YES in Step S116), the control device 15 proceeds to Step S118 and further operates the combustion return control. In a case where the first combustion portion 36 does not return to the combustion state even though the cathode gas increase control portion increases the supply amount of the cathode air (the cathode gas), the control device 15 (i.e" serving as an ignition device second operation portion) increases the supply amount of the cathode air and energizes the ignition heaters 36a1, 36a2 to operate. The control device 15 maintains this state in a predetermined time (for example, five minutes).

The control device 15 returns the supply amount of the cathode air to the supply amount of the cathode air before the cathode gas increase control portion increases the supply amount of the cathode air in Step S120. Similarly to Step S102, the control device 15 determines whether the combustion return control is required in Step S122. In a case where the control device 15 determines that the combustion return control is not required in Step S122 (NO in Step S122), the control device 15 returns to Step S102 via Step S113. The control device 15 stops the operation of the ignition heaters 36a1, 36a2 by stopping the energization of the ignition heaters 36a1, 36a2 in Step S113.

In a case where the control device 15 determines that the combustion return control is required in Step S122 (YES in Step S122), the control device 15 proceeds to Step S124 to further operate the combustion return control. In a case where the first combustion portion 36 does not return to the combustion state even though the ignition device second operation portion increases the supply amount of the cathode gas and ignites the ignition heaters 36a1, 36a2, the control device 15 (i.e., serving as an output electric power change portion) controls the source material pump 11 a1, the cathode air blower 11 c1 and the inverter device 13 to change the output amount of electric power of the fuel cell 34.

In particular, the control device 15 controls the inverter device 13 to reduce the sweep current sent from the fuel cell 34. Alternatively, along with the control of the inverter device 13, the control device 15 may control the source material pump 11a1 to reduce the supply amount thereof. Furthermore, the control device 15 may control the cathode air blower 11c1 to control the supply amount thereof.

It is favorable that the output electric power change portion changes the output amount of electric power only by a predetermined amount. Here, the control device 15 may control the source material pump 11a1 to change the supply amount that corresponds to a predetermined amount of the changed output electric power. Similarly, the control device 15 may control the cathode air blower 11 c1 to change the supply amount of the cathode air blower 11 c1.

Specifically, the control device 15 sets the predetermined amount of the output electric power in response to the output amount of electric power of the fuel cell 34 when determining that the combustion return control is required. For example, as shown in a type A in Fig. 7, in a case where the output amount of electric power of the fuel cell 34 when the control device 15 determines that the combustion return control is required is within a first range (for example, equal to or greater than 500 watts, or 500W and is equal to or less than the maximum output amount (for example, 700W)), the control device 15 sets a predetermined value to a lower limit value of a second range (for example, 300W). Furthermore, in a case where the control device 15 determines that the combustion return control is required even after the output amount of electric power of the fuel cell 34 changes, the control device 15 sets a predetermined value to a lower limit (for example, 50W) of a third range in a case where the output amount of electric power of the fuel cell 34 when the control device 15 determines that the combustion return control is required is within the second range (for example, equal to or greater than 300W and equal to or less than 500W). An upper limit value and the lower limit value of the second range of the output value are set high enough not to reduce the economic efficiency of a user since the economic efficiency of the user may be reduced if the output amount of electric power of the fuel cell 34 decreases too much.

As shown in a type B in Fig. 7, in a case where the output amount of electric power of the fuel cell 34 when the control device 15 determines that the combustion return control is required is within the second range (for example, equal to or greater than 300W and equal to or less than 500W), the control device 15 sets a predetermined value to a lower limit (for example, 50W) of the third range.

Alternatively, the control device 15 may fix the predetermined amount of the output amount of electric power of the fuel cell 34 to a constant value (for example, 200W). It is favorable that the constant value may be a value in which the combustion state may change from the blow-off state to the normal state because an air-fuel ratio of the first combustion portion 36 relatively and greatly changes.

Similarly to Step S102, the control device 15 determines whether the combustion return control is required in Step S126. In a case of determining that the combustion return control is not required in Step S126 (NO in Step S126), the control device 15 returns to Step S102 via Step S113. It is favorable that the source material pump 11a1, the cathode air blower 11 c1, and the inverter device 13 are returned to respective states before the output of the fuel cell 34 changes.

In case of determining that the combustion return control is required in Step S126 (YES in Step S126), the control device 15 proceeds to Step S128, and further operates the combustion return control. The control device 15 (the output electric power change portion) controls the source material pump 11a1, the cathode air blower 11 c1, and the inverter device 13 to change the output amount of electric power of the fuel cell 34.

In particular, the control device 15 controls the inverter device 13 to increase the sweep current sent from the fuel cell 34. The control device 15 may increase the supply amount of the source material pump 11a1 along with the control of the inverter device 13. The control device 15 may increase the supply amount of the cathode air blower 11c1.

The control device 15 determines whether the first combustion portion 36 is in a blow-off state in Step S130. For example, in a case where the second combustion portion temperature level detected by the temperature level sensor 12d is equal to or higher than the first determination temperature level TH2a for the second combustion portion temperature, or in a case where the second combustion portion temperature level detected by the temperature level sensor 12d is equal to or higher than the second determination temperature level TH2b for the second combustion portion temperature that is lower than the first determination temperature level TH2a for the second combustion portion temperature, the second combustion portion temperature level detected by the temperature level sensor 12d being lower than the first determination temperature level TH2a for the second combustion portion, and the fuel cell temperature level detected by the temperature level sensor 34d is lower than the determination temperature level TH1a for the fuel cell temperature, the control device 15 determines that the first combustion portion 36 is in the blow-off state.

In case of determining that the first combustion portion 36 is not in the blow-off state in Step S130 (NO in Step S130), the control device 15 returns to Step S102 via Step S113. It is favorable that the source material pump 11a1, the cathode air blower 11 c1 and the inverter device 13 are returned to respective states before the output amount of the fuel cell 36 changes.

In case of determining that the first combustion portion 36 is in the blow-off state in Step S130 (YES in Step S130), the control device 15 proceeds to Step S132 and stops the operation of the fuel cell system 1. The control device 15 increases a stop count by one in Step S134. In a case where the counted stop count comes to be equal to or greater than a predetermined value (for example, few times), the control device 15 determines that the stop count comes to be equal to or greater than the predetermined value (YES in Step S136), produces an error alert (Step S140), and stops the operation of the system (Step S142). On the other hand, in a case where the counted stop count is lower than the predetermined value (for example, the few times), the control device 15 determines that the stop count comes to be lower than the predetermined value (NO in Step S136), and restarts the fuel cell system 1 (Step S138).

A fuel cell system (1) includes a first combustion portion (36), a second combustion portion (39), an ignition device (36a1, 36a2), a source fuel supply device (11a1), and a control device (15). The control device (15) includes a determination portion (15) determining whether a combustion return control is required on a basis of a fuel cell temperature level detected by a first temperature level sensor (34d) and a second combustion portion temperature level detected by a second temperature level sensor (12d), the combustion return control returning the first combustion portion (36) that is entirely or partially in a blow-off state to a combustion state, and a source fuel increase control portion (15) controlling the source fuel supply device (11a1) to increase a supply amount of the source fuel in a case where the determination portion (15) determines that the combustion return control is required.

## Claims

1. A fuel cell system (1), comprising:
a fuel cell (34) generating an electric power by, one of an unreformed fuel being directly supplied from a supply source and a reformed fuel being generated by a reformation of a source material for reforming supplied from the supply source, and a cathode gas;
a first combustion portion (36) introducing a combustible gas including the unreformed fuel and the reformed fuel that are not used in and that are sent from the fuel cell (34), the first combustion portion (36) combusting the combustible gas with the cathode gas, the first combustion portion (36) discharging a combustion gas;
a second combustion portion (39) introducing the combustible gas that is not used in the first combustion portion (36) and that is discharged from the first combustion portion (36), the second combustion portion (39) combusting the combustible gas with the cathode gas, the second combustion portion (39) discharging the combustion gas;
an ignition device (36a1, 36a2) igniting the first combustion portion (36) by being energized;
a source fuel supply device (11a1) supplying a source fuel serving as the unreformed fuel or the source material for reforming;
a first temperature level sensor (34d) detecting a fuel cell temperature level serving as a temperature level of the fuel cell (34);
a second temperature level sensor (12d) detecting a second combustion portion temperature level serving as a temperature level of the second combustion portion (39); and
a control device (15) controlling at least the source fuel supply device (11a1); wherein
the control device (15) includes:
a determination portion (15) determining whether a combustion return control is required on a basis of the fuel cell temperature level detected by the first temperature level sensor (34d) and the second combustion portion temperature level detected by the second temperature level sensor (12d), the combustion return control returning the first combustion portion (36) that is entirely or partially in a blow-off state to a combustion state; and
a source fuel increase control portion (15) controlling the source fuel supply device (11a1) to increase a supply amount of the source fuel in a case where the determination portion (15) determines that the combustion return control is required.

2. The fuel cell system (1) according to Claim 1, wherein in a case where the second combustion portion temperature level detected by the second temperature level sensor (12d) is equal to or higher than the a first determination temperature level (TH2a) for the second combustion portion temperature, or in a case where the second combustion portion temperature level detected by the second temperature level sensor (12d) is equal to or higher than a second determination temperature level (TH2b) for the second combustion portion temperature that is lower than the first determination temperature level (TH2a) for the second combustion portion temperature and being lower than the first determination temperature level (TH2a) for the second combustion portion temperature, and the fuel cell temperature level detected by the first temperature level sensor (34d) is lower than a determination temperature level (TH1a) for the fuel cell temperature, the determination portion (15) determines that the combustion return control is required.

3. The fuel cell system (1) according to claim 2, wherein the first determination temperature level for the second combustion portion temperature and the second determination temperature level for the second combustion portion temperature are corrected in response to an environmental temperature level of the fuel cell system (1).

4. The fuel cell system (1) according to claim 2, wherein the first determination temperature level for the second combustion portion temperature and the second determination temperature level for the second combustion portion temperature are corrected in response to an output amount of the electric power of the fuel cell (34).

5. The fuel cell system (1) according to one of claims 1 to 4, wherein
the control device (15) further includes an ignition device first operation portion (15); and
the ignition device first operation portion (15) increases the supply amount of the source fuel and operates the ignition device (36a1, 36a2) in a case where the first combustion portion (36) does not return to the combustion state even though the source fuel increase control portion (15) increases the supply amount of the source fuel.

6. The fuel cell system (1) according to claim 5, further comprising
a cathode gas supply device (11 c1) supplying the cathode gas to the first combustion portion (36); wherein
the control device (15) further includes
a cathode gas increase control portion (15) controlling the cathode gas supply device (11c1) to increase a supply amount of the cathode gas supplied to the first combustion portion (36) in a case where the first combustion portion (36) does not return to the combustion state even though the ignition device first operation portion (15) increases the supply amount of the source fuel and operates the first ignition device (36a1, 36a2).

7. The fuel cell system (1) according to claim 6, wherein
the control device (15) further includes an ignition device second operation portion (15); and
the ignition device second operation portion (15) increases the supply amount of the cathode gas and operates the ignition device (36a1, 36a2) in a case where the first combustion portion (36) does not return to the combustion state even though the cathode gas increase control portion (15) increases the supply amount of the cathode gas.

8. The fuel cell system (1) according to claim 7, further comprising:
an inverter device (13) converting a direct-current voltage outputted from the fuel cell (34) into an alternating-current voltage; wherein
the control device (15) further includes
an output electric power change portion (15) controlling the source fuel supply device (11a1), the cathode gas supply device (11c1), and the inverter device (13) to change the output amount of the electric power of the fuel cell (34) in a case where the first combustion portion (36) does not return to the combustion state even though the ignition device second operation portion (15) increases the supply amount of the cathode gas and ignites the ignition device (36a1, 36a2).

9. The fuel cell system (1) according to claim 8, wherein the output electric power change portion (15) changes the output amount of the electric power only by a predetermined amount.
